# EUROPEAN PATENT SPECIFICATION

(11) **EP 2 518 035 B1**
(45) Date of publication and mention of the grant of the patent: **27.05.2026**
(21) Application number: 12398002.1
(22) Date of filing: 26.04.2012
(51) Int. Cl.: C04B 28/04

(54) **White or coloured, dry, predosed and self-compactable concrete of quick setting with architectural high performances**
Weißer oder farbiger, trockener, vordosierter und selbstverdichtender, schnellhärtender Beton mit hohen Bauleistungen
Béton blanc ou coloré, sec, prédosé et auto-compactable à prise rapide ayant des performances architecturales élevées

(30) Priority: 29.04.2011 PT 10566611
(43) Date of publication of application: 31.10.2012
(73) Proprietor: Secil-Companhia Geral de Cal e Cimento, S.A., 2901-864 Setúbal (PT)
(72) Inventor: De Sequeira Serra Nunes, Angela Maria Jesus, 2925-181 Azeitão (PT); Lopes Gago, Pedro Eusébio, 2870-468 Montijo (PT)
(74) Representative: Pereira da Cruz, Jorge Afonso

(56) References cited:
- CN-A- 101 891 429
- FR-A1- 2 929 270
- US-A1- 2007 125 273

## Description

### FIELD OF THE INVENTION

The present invention is disclosed within the field of the new building materials, namely of white or coloured micro-concretes and common concretes which are supplied in dry and predosed form, these being preferably used in the fields of precasting industries, superstructures being concreted *in-situ,* street furniture and other decorative elements, with excellent structural and architectural features, such as fast setting and hardening, self-compactable, high level of compression strength and good resistance to aggressive environmental exposure.

### BACKGROUND OF THE INVENTION

The fair faced white concrete, i.e. the one which has an architectural high performance, is now widely used in Architecture and Civil Engineering because it allows many technical and aesthetic challenges to be addressed as required by current architectural trends.

In fact, the concreting of fair faced white concrete buildings currently demands top quality materials to be used in particular in what concerns the finishings, while meeting all the remaining functional requirements. As a structural material, the mechanical strength, durability, as well as maintenance of a good appearance over time, are properties of major importance.

On the other side, with a demanding final result to be obtained through its use, the easy concreting and application is another important factor to be considered when valuing the product. Therefore, its workability must be excellent and maintained until the end of the application time.

Another relevant aspect is that in order to have the aforementioned effects, i.e. a good workability - susceptible of being maintained in due time, a good finishing of the concreted surfaces, the need of applying the concrete sometimes in extreme conditions, such as in the case of (Thin)slender sections or in the presence of high density frameworks, or even unfavourable climate conditions, leads to the use of high quantities of adjuvants which will significantly delay the setting and hardening of the material, thus leading to prorogation of deadlines in terms of execution and demolding.

White concrete is currently produced in concrete central-mix plants, usually on a wet basis, presenting the normal features of common concretes with the exception of the finishing, since it allows very smooth surfaces to be obtained with an excellent finishing.

The current products, which are disclosed in the French patent with the publication number FR 2929270, are self-compactable concretes with quick setting and hardening, but supplied in other than the predosed dry form, and are aimed at attaining a performance similar to the field of application of this invention. On the other side, with the products described in patent FR 2929270, which use aluminous cements, the obtained concrete shows a more sensitive durability in the presence of an aggressive environment, thus giving origin to potentially expansive reactions, contrarily to what happens with the ones disclosed in the present invention, wherein only Portland cements are used.

The Chinese patent application CN 101328043 discloses a method for the preparation of a highly brilliant white cement having a strong resistance to climate conditions, but with a rather different composition when compared to the concrete of this invention.

The Spanish patent ES 2018744 discloses a white concrete containing white Portland cement, calcium carbonate, quartz and titanium dioxide, to be used in building and paving works.

The United States patent US 3.666.509 discloses a dry mixture for the production of white concrete containing white cement, a silica- or alumina-based aggregate, and titanium dioxide.

The United States patent US 2007/125273 discloses a lightweight concrete mixture formulation, comprising among others, a white Portland cement, a plasticizer and a set controlling admixture.

### SUMMARY OF THE INVENTION

The technical problem which is solved is that, according to this invention, it is possible to have a premixed material presenting equivalent properties to the ones of common architectural white concretes, but with a very fast setting time, thus allowing the pieces to be demolded within 1 hour, and self-cleaning properties. On the other hand, its use is very easy. So, adding water and mixing will be enough, not requiring any special means to be applied.

The technical solution that was found has enabled a dry white concrete to be produced from classified aggregates, modified white cements and adjuvants and several additions, which has self-cleaning properties and a quick setting time, being easy to use and providing architectural high performances.

### DETAILED DESCRIPTION OF THE INVENTION

This invention relates to micro-concretes and common concretes based in white Portland cement, which are highly homogeneous and ready to use, with a high performance in terms of structure and environmental exposition, being enough to add water and mixing adequately by using a concrete mixer or a stirrer and apply it on the mold or formwork. In less than 60 minutes, at normal temperatures within the range of 18°C-25°C, it will harden and allow the mold to be released and the piece to be moved.

At the architectural level, these concrete materials have an excellent workability, a variety of colour finishings, and a quick setting thus allowing high-demand pieces to be rapidly demolded after the concreting operation.

Its ease of use and the guaranteed results are important advantages, since the mixture is previously prepared and adding water is the only thing to be done.

General processes and broad applications are hereinunder highlighted:
- Walls and pavements, or other structural elements being concreted *in situ* or prefabricated in concrete or other materials, such as ceramic, plasters and a multitude of panels.
- Building façades (large façade components or prefabricated panels),
- Superstructures of viaducts and border beams
- Road, pedestrian and aeronautical pavements in concrete, both urban and non-urban.
- Information plates
- Street furniture
- Decorative elements for inner and outer spaces
- Tilings and coating materials

When compared to other products of similar performance, the ones described in this invention can be distinguished in that they are supplied in a dry predosed form, with immediate advantages as regards application time, homogeneity, as well as economical and environmental aspects.

It is a value-added product because it provides a greater ease of use, requires only a few means to be prepared and the setting occurs within 60 minutes, due to a very fast hardening, in addition to its white colour and the architectural and structural high performances.

These advantages are translated into spared means and resources, allowing for high yields to be obtained during the production of white concrete pieces, which causes this solution to be adopted even if the usual means are not available on the installation/work site (concrete central mix plant).

Also, the self-cleaning effect provides the pieces with a high durability in terms of appearance, which represents a sparing of the buildings cleaning and maintenance costs.

The employed aggregates are classified aggregates of calco-siliceous origin, which comply with all the requirements on the manufacturing of architectural white concrete as regards size, state of purity and cleaning, strength, grain shape, among other properties.

The binders used are white cements of high whiteness and modified strength in what concerns their setting and hardening features, which are obtained through a number of chemical and mineralogical modifications, additions and adjuvants for that purpose.

In effect, one of the objects of this invention is to provide a time period as short as possible between the start and the end of the setting (< 10 minutes depending on the temperature), so that its start would allow the pieces to be demolded within 60 minutes.

On the other side, the initial strengths are very high in order to allow the handling of large sections within the shorter period of time (< 3 hours - 5 MPa and 4 hours > 12 MPa).

By adjusting the mineralogy of cements, namely the C₃S content upper then 65%, with high reactivity given by the type of crystallization and grain size (< 30 microns), and ajusting the CaSO4 content so that the reactivity of the aluminate phases was maximized, namely the one of C₃A in order to deliver an efficient setting. Furthermore, by carrying out several additions of high reactivity and fineness such as metakaolins, high-activity pozzolans, reactive calcium hydroxides, high-fineness calcium sulphates and different setting accelerators based in calcium aluminates, calcium formiates, micro-materials and nano-materials with a reactive silica base, anatase and other oxides such as zinc, the desired effect was achieved along with a controlled shrinkage and cracking.

### Definition

Throughout this description and the relevant claims, the term "concrete", unless otherwise specified, shall mean both the common concretes (with granulometry above 4 mm) and micro-concretes (with granulometry under 4 mm).

### Object of the invention

The object of this invention is a white or coloured, dry, predosed, and self-compactable concrete of quick setting which comprises, in percentage by weight of the components with reference to the composition total weight:
a) 17.50% of white Portland cement;
b) 2.80% of CaO and 0.01% of NaAlO₂;
c) 30% of crushed limestone aggregates, having a granulometry between 4 and 10 mm;
d) 20.30% of lime sand, having a granulometry between 1.5 and 3.5 mm;
e) 10.50% of lime sand, having a granulometry between 0.6 and 1.5 mm;
f) 5.6% of lime sand, having a granulometry of less than 250 µm;
g) 12.56% of natural siliceous aggregate, having a granulometry between 0 and 1 mm;
h) 0.17% of sulphonated melamine condensate;
i) 0.21% of calcium chloride (CaCl₂); and
j) 0.35% of calcium formate (Ca(COOH)₂).

Component b) refers to the setting adjuster and is 2.80% of CaO and 0.01% of NaAlO₂ in a percentage by weight .

The superplasticizer above referred as component h) is sulphonated melamine condensates.

In case a coloured concrete is used, an inorganic pigment will be included and will generally be selected from metal oxide pigments.

The concrete according to the invention will usually have a mechanical compression strength within 4 hours > 12 MPa.

### Example of Preparation

The following example relate to the preparation of white concrete according to the invention.

### Example 1:

### Common white predosed and self-compactable concrete of quick setting with architectural high performance

| | Components | Weight % |
|---|---|---|
| 1 | Lime Sand (1.5/3.5) mm | 20.30 |
| 2 | Lime Sand (0.6/1.5) mm | 10.50 |
| 3 | Lime Sand < 250 µm | 5.60 |
| 4 | Natural siliceous aggregate (0/1,) mm | 12.56 |
| 5 | Crushed limestone aggregate (4/10) mm | 30.00 |
| 6 | Sulphonated melamine condensate | 0.17 |
| 7 | CaCl₂ | 0.21 |
| 8 | Ca(COOH)₂ | 0.35 |
| 9 | White Portland cement I 52,5R | 17.50 |
| 10 | CaO | 2.80 |
| 11 | Sodium aluminate | 0.01 |

### Production steps:

Components 1, 2, 3, 4 and 5 are fed into the mixer, followed by the addition of components 6, 7, 8 and 9 and stirring for at least 120 s. Components 10 and 11 are then added and stirred during 120 s.

### Characteristics of the concrete according to the invention

The main characteristics obtained are summarized in the following table as regards a type-composition:

| **White or coloured micro-concrete** | |
|---|---|
| **Property** | **Results** |
| Mixing (Slurry) Water (%)⁽¹⁾ | 25.1 |
| Start of setting (min)⁽¹⁾ | 40.0 |
| End of setting (min)⁽¹⁾ | 50.0 |
| Demolding time (min) | 60⁽²⁾; 35⁽³⁾; 70⁽⁴⁾ |
| Flow-test (Spreading) (mm) | 195 |
| A/C | 0.4 |

| **Compressive strength (MPa)** | |
|---|---|
| 2 days | 51.1 |
| 7 days | 62.4 |
| 28 days | 65.0 |

| **White or coloured common concrete** | |
|---|---|
| **Property** | **Results** |
| A/C | 0.47 |
| (Flow-test)Spreading | 550 |
| Demolding time (min)⁽⁵⁾ | 180 |
| Demolding time (min) | 60⁽²⁾; 35⁽³⁾; 70⁽⁴⁾ |

| **Dynamic Young (elasticity) modulus (GPa)** | |
|---|---|
| 2 days | 43.5 |
| 7 days | 49.3 |
| 28 days | 52.2 |

| **Compressive strength (MPa)** | |
|---|---|
| 2 hours | 0.6 |
| 4 hours | 12.5 |
| 8 hours | 26.7 |
| 1 day | 43.7 |
| 2 days | 47.2 |
| 7 days | 64.2 |
| 28 days | 72.1 |

### Captions:

(1) Tests carried out under slurry;
(2) Demolding of side faces in test pieces of 4x4x16 cm;
(3) Demolding of side faces in cubes of 15 cm;
(4) Handling of the test piece in cube of 15 cm;
(5) Complete demolding of the PVC formwork of cylinders measuring 150x300 mm.

### Industrial Use

The following are some examples of possible applications of this technology:

### Light prefabrication of white cement artefacts:

Production of white concrete prefabricated pieces with complex shapes and considerable slenderness, delivering a strong wall effect and high production turnover.

### Production of white concrete structural pieces both prefabricated and in situ:

The concreting of pieces with a high mechanical demand can be performed using a local mixer, thus obtaining an excellent finishing effect, low shrinkage and high durability self-cleaning pieces with fast demolding, in less than 60 minutes, and movimentation according to the type and stress of the same, in most cases within 2 hours (5 MPa).
Rapid pavings in white concrete with urgent entry into service within the field of industrial, aeronautical, road and pedestrian pavements.
Quick structural repairs or with fast entry into service.

## Claims

1. A white or coloured, dry, predosed and self-compactable concrete of quick setting, which comprises, in percentage by weight of the components with reference to the composition total weight:
a) 17.50% of white Portland cement;
b) 2.80% of CaO and 0.01% of NaAlO₂;
c) 30% of crushed limestone aggregates, having a granulometry between 4 and 10 mm;
d) 20.30% of lime sand, having a granulometry between 1.5 and 3.5 mm;
e) 10.50% of lime sand, having a granulometry between 0.6 and 1.5 mm;
f) 5.6% of lime sand, having a granulometry of less than 250 µm;
g) 12.56% of natural siliceous aggregate, having a granulometry between 0 and 1 mm;
h) 0.17% of sulphonated melamine condensate;
i) 0.21% of calcium chloride (CaCl₂); and
j) 0.35% of calcium formate (Ca(COOH)₂).

## Patentansprüche

1. Weißer oder gefärbter, trockener, vordosierter und selbstverdichtbarer, schnell abbindender Beton, der in Gewichtsprozent der Bestandteile, bezogen auf das Gesamtgewicht der Zusammensetzung, enthält
a) 17,50% weißen Portlandzement;
b) 2,80% CaO und 0,01% NaAlO₂;
c) 30% gebrochene Kalksteinzuschläge mit einer Korngröße zwischen 4 und 10 mm;
d) 20,30% Kalksand mit einer Korngröße zwischen 1,5 und 3,5 mm;
e) 10,50% Kalksand mit einer Korngröße zwischen 0,6 und 1,5 mm;
f) 5,6% Kalksand mit einer Korngröße von weniger als 250 µm;
g) 12,56% natürlicher Kieselzuschlag mit einer Korngröße zwischen 0 und 1 mm;
h) 0,17% sulfoniertes Melaminkondensat;
i) 0,21% Calciumchlorid (CaCl₂); und
j) 0,35% Calciumformiat (Ca(COOH)₂).

## Revendications

1. Béton blanc ou coloré, sec, pré-dosé et autoplaçant à prise rapide, lequel comprend, en pourcentage en poids des composants par rapport au poids total de la composition :
a) 17,50% de ciment Portland blanc ;
b) 2,80% de CaO et 0,01 % de NaAlO₂ ;
c) 30% d'agrégats de calcaire concassé, d'une granulométrie comprise entre 4 et 10 mm ;
d) 20,30% de sable calcaire, d'une granulométrie comprise entre 1,5 et 3,5 mm ;
e) 10,50% de sable calcaire, d'une granulométrie comprise entre 0,6 et 1,5 mm ;
f) 5,6% de sable calcaire, d'une granulométrie inférieure à 250 µm ;
g) 12,56% d'agrégat siliceux naturel, d'une granulométrie comprise entre 0 et 1 mm ;
h) 0,17% de condensat de mélamine sulfonée ;
i) 0,21% de chlorure de calcium (CaCl₂) ; et
j) 0,35% de formiate de calcium (Ca(COOH)₂).
